# FASCICULE DE BREVET EUROPEEN

(11) **EP 3 058 209 B1**
(45) Date de publication et mention de la délivrance du brevet: **13.09.2017**
(21) Numéro de dépôt: 14796232.8
(22) Date de dépôt: 16.10.2014
(51) Int. Cl.: F02K 1/76

(54) **PROCÉDÉ DE SURVEILLANCE D'UN SYSTÈME DE VERROUILLAGE POUR INVERSEUR DE POUSSÉE DE TURBOMACHINE**
VERFAHREN ZUR ÜBERWACHUNG EINES VERRIEGELUNGSSYSTEMS FÜR EINEN TURBINENMOTOR-SCHUBUMKEHRER
METHOD FOR MONITORING A LOCKING SYSTEM FOR A TURBINE ENGINE THRUST REVERSER

(30) Priorité: 18.10.2013 FR 1360169
(43) Date de publication de la demande: 24.08.2016
(73) Titulaire: SNECMA, 75015 Paris (FR)
(72) Inventeur: ALLUT, Gabriel, F-75012 Paris (FR); BOZETINE, Mohamed, F-91120 Palaiseau (FR); COLIN, Antoine, Olivier, François, F-91800 Brunoy (FR); PIQUET, Barbara-Ann, F-94140 Alfortville (FR)
(74) Mandataire: Cabinet Camus Lebkiri
(86) Numéro de dépôt international: PCT/FR2014/052636
(87) Numéro de publication internationale: WO 2015/055957

(56) Documents cités:
- EP-A1- 1 413 735
- FR-A1- 2 928 681
- FR-A1- 2 978 801

## Description

### DOMAINE TECHNIQUE

La présente invention concerne un procédé de surveillance d'un système de verrouillage d'un inverseur de poussée pour turbomachine.

### ETAT DE LA TECHNIQUE ANTERIEUR

Les turbomachines sont classiquement équipées d'inverseurs de poussée qui permettent d'orienter vers l'avant la poussée exercée par la turbomachine afin de freiner l'avion, ce qui permet notamment de réduire les distances de freinage lors de l'atterrissage.

En vol, l'inverseur de poussée doit être verrouillé. Par contre, lors de l'atterrissage, l'inverseur de poussée doit pouvoir être déployé. Afin d'éviter tout risque de déploiement intempestif de l'inverseur de poussée en vol, l'inverseur de poussée est généralement verrouillé par un système de verrouillage comportant trois verrous, chaque verrou étant commandé de manière indépendante. Afin de renforcer la sécurité, l'état de chaque verrou est généralement surveillé par deux capteurs de verrouillage qui indiquent au calculateur moteur si le verrou est verrouillé ou déverrouillé. Le calculateur moteur reçoit ainsi un grand nombre d'informations et il lui est parfois difficile d'identifier si ces informations sont fiables ou non. Le brevet FR2978801 décrit un tel procédé de surveillance.

### EXPOSE DE L'INVENTION

L'invention vise à remédier aux inconvénients de l'état de la technique en proposant un procédé de surveillance d'un système de verrouillage et notamment d'un système de verrouillage d'un inverseur de turbomachine qui donne non seulement des informations sur l'état de verrouillage du système, mais aussi sur la fiabilité des informations qu'il fournit.

Pour cela, l'invention propose un procédé de surveillance selon la revendication 1. Plus précisément, un premier aspect de l'invention concerne un procédé de surveillance d'un système de verrouillage comportant N verrous, chaque verrou étant surveillé par deux capteurs de verrouillage, chaque capteur de verrouillage étant apte à indiquer si le verrou qu'il surveille est dans un état verrouillé ou déverrouillé, chaque capteur de verrouillage pouvant être dans un statut valide ou invalide, le procédé comportant les étapes suivantes :
- Détermination de l'état du système de verrouillage en fonction de l'état des verrous détecté par les capteurs de verrouillage;
- Détermination d'un niveau de confiance associé à l'état du système de verrouillage en fonction du nombre de capteurs de verrouillage valides surveillant les verrous qui sont dans le même état que le système de verrouillage.

On appelle « état » d'un capteur de verrouillage l'information qu'il fournit sur l'état de verrouillage du verrou détecté. Ainsi, en mode nominal, un capteur de verrouillage est dans un état verrouillé lorsque le verrou qu'il détecte est verrouillé et dans un état déverrouillé lorsque le verrou qu'il détecte est déverrouillé.

On appelle « statut » d'un capteur de verrouillage l'information sur sa validité. Ainsi, le « statut » d'un capteur de verrouillage peut être valide lorsque ledit capteur de verrouillage est valide ou invalide lorsque ledit capteur de verrouillage est invalide.

On appelle « état global» d'un verrou ou du système de verrouillage l'information sur son verrouillage. Ainsi, un verrou est dans un état global verrouillé lorsque ledit verrou est verrouillé et dans un état global déverrouillé lorsque ledit verrou est déverrouillé.

On appelle « statut » d'un verrou l'information sur la validité des informations qui ont servit à déterminer son état global.

Ainsi, le procédé de surveillance permet d'indiquer quel niveau de confiance on peut attribuer à l'information au sujet de l'état du système de verrouillage. Ce procédé est particulièrement avantageux lorsque le nombre de verrous est grand car dans ce cas, les dispositifs de surveillance reçoivent un grand nombre d'informations sur l'état des capteurs de verrouillage et il leur est difficile de savoir si l'information qui en résulte est fiable ou non.

Le procédé selon l'invention peut également présenter une ou plusieurs des caractéristiques ci-après prises indépendamment ou selon toutes les combinaisons techniquement possibles.

Avantageusement, l'étape de détermination de l'état du système de verrouillage comporte les étapes suivantes :
- Acquisition du statut et de l'état de chaque capteur de verrouillage par le calculateur;
- Détermination de l'état global et du statut de chaque verrou en fonction du statut et de l'état des deux capteurs de verrouillage qui le surveillent ;
- Détermination de l'état du système de verrouillage en fonction de l'état global de chaque verrou.

Ainsi, pour déterminer l'état du système de verrouillage, on détermine d'abord l'état global de chaque verrou à partir des informations données par chacun des capteurs de verrouillage qui le surveille et à partir du statut de ces capteurs de verrouillage. Le fait de prendre en compte la validité des capteurs de verrouillage dans la détermination de l'état global des verrous permet de renforcer la fiabilité des données obtenues.

Avantageusement, le procédé comporte en outre, suite à l'étape de détermination de l'état global et du statut de chaque verrou en fonction du statut et de l'état des deux capteurs de verrouillage qui le surveillent, une étape d'association d'un indice de confiance à l'état global.

Selon plusieurs modes de réalisation de l'invention, pris indépendamment ou selon toutes les combinaisons techniquement possibles :
- seuls les états des capteurs de verrouillage dont le statut est valide sont utilisés pour déterminer l'état global d'un verrou ;
- lorsque les statuts des deux capteurs de verrouillage qui surveillent un même verrou sont invalides, on attribue à ce verrou un état global déverrouillé et on considère son statut invalide ;
- lorsque les statuts des deux capteurs de verrouillage qui surveillent un même verrou sont valides mais qu'ils détectent des états pour ce verrou qui sont différents, on attribue à ce verrou un état global déverrouillé et on considère son statut invalide.

Plus précisément, on attribue de préférence comme état global à chaque verrou les états suivants :
- Si les deux capteurs de verrouillage qui surveillent un verrou sont valides et qu'ils détectent le même état pour ce verrou, alors on attribue comme état global à ce verrou, l'état donné par les deux capteurs de verrouillage ;
- Si les deux capteurs de verrouillage qui surveillent un verrou sont valides mais qu'ils ne détectent pas le même état pour ce verrou, alors on considère que ces capteurs de verrouillage sont invalides et on considère que ce verrou est dans un état global déverrouillé ;
- Si un des capteurs de verrouillage qui surveille un verrou est valide et que l'autre capteur de verrouillage qui surveille ce verrou est invalide, alors on attribue comme état global à ce verrou l'état détecté par le capteur de verrouillage valide ;
Si les deux capteurs de verrouillage qui surveillent un verrou sont invalides, alors on considère que ce verrou est déverrouillé.

Avantageusement, le procédé comporte en outre une étape de détermination d'un indice de confiance associé à l'état global de chaque verrou, l'indice de confiance étant égal au nombre de capteurs de verrouillage valides qui détectent un état pour le verrou conforme à l'état global du verrou. Ainsi :
- Si les deux capteurs de verrouillage qui surveillent un verrou sont valides et qu'ils détectent le même état pour ce verrou, alors on attribue comme état global à ce verrou, l'état détecté par les deux capteurs de verrouillage et l'indice de confiance associé à cet état global est égal à 2;
- Si les deux capteurs de verrouillage qui surveillent un verrou sont valides mais qu'ils ne détectent pas le même état pour ce verrou, alors on considère que ces capteurs de verrouillage sont invalides. On considère alors que ce verrou est dans un état global déverrouillé et l'indice de confiance associé à cet état global est égal à 0; ,
- Si un des capteurs de verrouillage qui surveille un verrou est valide et que l'autre capteur de verrouillage qui surveille ce verrou est invalide, alors on attribue comme état global à ce verrou l'état détecté par le capteur de verrouillage valide et l'indice de confiance associé à cet état global est égal à 1 ;
- Si les deux capteurs de verrouillage qui surveillent un verrou sont invalides, alors on considère que ce verrou est déverrouillé et l'indice de confiance associé à cet état est égal à 0.
Ainsi, le niveau de confiance correspond de préférence au nombre de capteurs que nous pouvons croire pour déterminer l'état du verrou.
Selon un mode de réalisation préférentiel, le niveau de confiance est déterminé en additionnant les indices de confiance associés aux états globaux des verrous qui sont dans le même état global que le système de verrouillage.

Avantageusement, le procédé comporte en outre :
- une étape de comparaison du niveau de confiance à un niveau seuil ;
- une étape d'association d'un niveau de confiance à l'état du système de verrouillage. Si le niveau de confiance est supérieur à au niveau seuil, alors le niveau de fiabilité est un niveau de fiabilité haut. Si le niveau de confiance est inférieur au niveau seuil alors le niveau de fiabilité est un niveau bas.

Avantageusement, l'état du système de verrouillage est déterminé suivant au moins un des critères suivants :
- on considère que le système de verrouillage est dans un état verrouillé lorsqu'au moins P verrous sont dans un état global verrouillé;
- on considère que le système de verrouillage est dans un état déverrouillé lorsqu'au moins Q verrous sont dans un état global déverrouillé.

Avantageusement, le système de verrouillage permet d'empêcher le déplacement d'un dispositif mobile, qui est de préférence un inverseur de poussée. Le déplacement de ce dispositif peut être mesuré grâce à au moins un capteur de position, de préférence deux capteurs de position.

Avantageusement, le procédé comporte en outre les étapes suivantes :
- détermination de la position du dispositif mobile grâce au capteur de position ;
- comparaison de la position du dispositif mobile avec l'état de verrouillage du système de verrouillage.

Un autre aspect de l'invention concerne l'utilisation du procédé de surveillance selon le premier aspect de l'invention pour surveiller un système de verrouillage d'un inverseur de poussée pour turbomachine.

Un autre aspect de l'invention concerne un dispositif de surveillance d'un système de verrouillage comportant N verrou, le dispositif de surveillance comportant des moyens pour la mise en oeuvre d'un procédé selon le premier aspect de l'invention.

Ce dispositif de surveillance comporte de préférence :
- au moins 2N capteurs de verrouillage, les capteurs de verrouillage étant agencés de façon à ce que chaque verrou soit surveillé par deux capteurs de verrouillage ;
- des moyens de détection aptes à détecter le statut de chaque capteur de verrouillage;
- des moyens de calcul aptes à déterminer l'état du système de verrouillage et un niveau de confiance associé à partir des données des capteurs de verrouillage et des moyens de détection.

### BREVES DESCRIPTION DES FIGURES

D'autres caractéristiques et avantages de l'invention ressortiront à la lecture de la description détaillée qui suit, en référence aux figures annexées, qui illustrent :
- La figure 1, une représentation schématique d'un dispositif de surveillance selon un mode de réalisation de l'invention ;
- La figure 2, une représentation schématique des étapes d'un procédé de surveillance selon un mode de réalisation de l'invention.

Pour plus de clarté, les éléments identiques ou similaires sont repérés par des signes de références identiques sur l'ensemble des figures.

### DESCRIPTION DETAILLEE D'AU MOINS UN MODE DE REALISATION

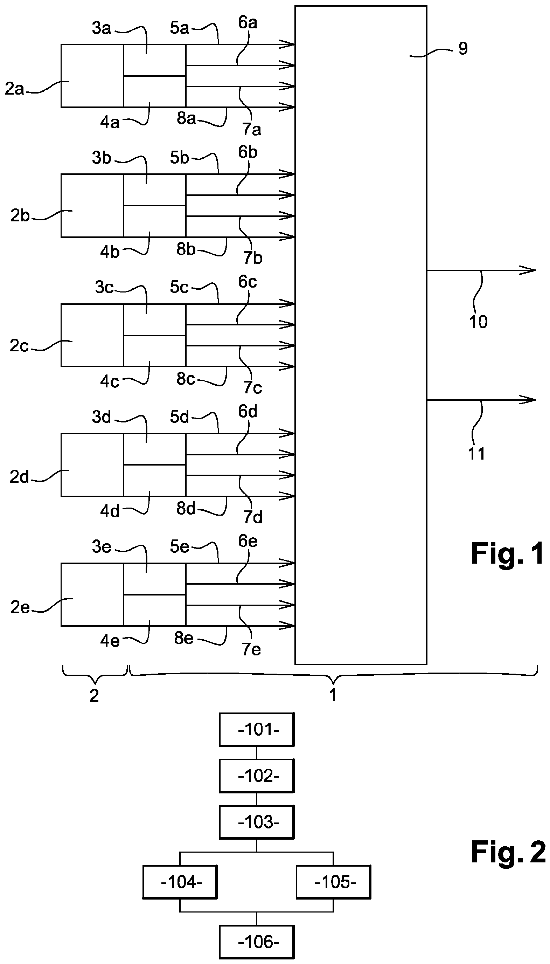

La figure 1 représente un système de verrouillage 2 et un dispositif de surveillance 1 mettant en oeuvre un procédé de surveillance selon un mode de réalisation de l'invention. Ce système de verrouillage 2 permet de verrouiller un inverseur de poussée d'une turbomachine (non représenté). Pour cela, le système de verrouillage 2 comporte cinq verrous 2a, 2b, 2c, 2d, 2e. Chaque verrou peut être placé dans un état verrouillé ou dans un état déverrouillé. Lorsque le système de verrouillage fonctionne normalement, il est dans un état verrouillé lorsque tous les verrous sont dans un état verrouillés et dans un état déverrouillé lorsque tous les verrous sont dans un état déverrouillés. Lorsque le système de verrouillage est verrouillé, il empêche le déploiement de l'inverseur de poussée. Lorsque le système de déverrouillage est déverrouillé, il n'empêche pas le déploiement de l'inverseur de poussée. Les verrous sont commandés par le calculateur moteur ou FADEC et par l'avion. Ce calculateur permet de commander le verrouillage et le déverrouillage des verrous.

Le dispositif de surveillance 1 permet de surveiller que le système de verrouillage est dans un état conforme à la commande du calculateur moteur, c'est-à-dire que le système de verrouillage est bien verrouillé quand le calculateur moteur lui commande de l'être et que le système de verrouillage est bien déverrouillé quand le calculateur moteur lui commande de l'être.

Dans ce mode de réalisation, dans lequel le système de verrouillage comporte cinq verrous, on considère que le système de verrouillage est dans un état verrouillé lorsqu'au moins P verrous sont verrouillés, avec P égal à 3 et on considère que le système de verrouillage est dans un état déverrouillé lorsqu'au moins Q verrous sont déverrouillés, avec Q égal à 3. Par conséquent, dans ce mode de réalisation, le système de verrouillage est considéré comme verrouillé lorsque plus de la moitié des verrous sont verrouillés et le système de verrouillage est considéré comme déverrouillé lorsque plus de la moitié des verrous sont déverrouillés.

Chaque verrou 2a, 2b, 2c, 2d, 2e est surveillé par deux capteurs de verrouillage respectivement 3a, 4a, 3b, 4b, 3c, 4c, 3d, 4d, 3e, 4e. On appelle « statut » d'un des capteurs de verrouillage le fait ce capteur soit valide ou invalide. Par abus de langage, on dit qu'un capteur de verrouillage est verrouillé lorsqu'il détecte que le verrou qu'il surveille est verrouillé et qu'un capteur de verrouillage est déverrouillé lorsqu'il détecte que le verrou qu'il surveille est déverrouillé. Dans ce mode de réalisation, un capteur de verrouillage est valide lorsqu'il est reçoit un courant d'excitation provenant du calculateur moteur et que les tests électriques effectués sur les signaux ne révèlent pas de panne du capteur. Dans ce cas, le capteur de verrouillage est apte à détecter si le verrou qu'il surveille est verrouillé ou déverrouillé. Par contre, lorsque le capteur de verrouillage ne reçoit pas de courant ou que les tests électriques effectués par le calculateur sur les signaux de sortie du capteur révèlent une panne de ce dernier, il n'est pas en état de fonctionnement et n'est pas capable de détecter si le verrou qu'il surveille est verrouillé ou déverrouillé : son statut est donc considéré comme invalide.

Le dispositif de surveillance selon l'invention comporte donc des moyens de détection aptes à déterminer si chaque capteur de verrouillage fonctionne nominalement ou bien s'il est en panne. Par conséquent, ces moyens de détection sont aptes à déterminer si chaque capteur de verrouillage est dans un statut valide ou invalide. Ces moyens de détection transmettent donc des données 6a, 8a, 6b, 8b, 6c, 8c, 6d, 8d, 6e, 8e au calculateur moteur sur le statut de chacun des capteurs de verrouillage 3a, 4a, 3b, 4b, 3c, 4c, 3d, 4d, 3e, 4e.

Par ailleurs, chaque capteur de verrouillage 3a, 4a, 3b, 4b, 3c, 4c, 3d, 4d, 3e, 4e sonde un des verrous 2a, 2b, 2c, 2d, 2e de façon à détecter si ledit verrou est dans un état verrouillé ou déverrouillé. Normalement, lorsque les capteurs de verrouillage sont valides, ils détectent que les verrous sont verrouillés lorsque ceux-ci sont effectivement verrouillés et ils détectent que les verrous sont déverrouillés lorsque ceux-ci sont effectivement déverrouillés. Toutefois, lorsqu'un capteur de verrouillage est invalide, il peut indiquer qu'un verrou est déverrouillé alors que ce verrou est verrouillé.

Pour remédier à ce problème, le procédé de surveillance propose de prendre en compte le statut des capteurs de verrouillage pour déterminer l'état des verrous et donc du système de verrouillage. En outre, comme le système de verrouillage comporte un grand nombre de verrous, l'information sur son verrouillage ou son déverrouillage tient compte d'un grand nombre de capteurs de verrouillage. Il peut donc être difficile de savoir si on peut faire confiance à une information provenant d'un grand nombre de capteurs de verrouillage. Pour remédier à ce problème le procédé de surveillance selon l'invention propose d'associer à l'information sur l'état du système de verrouillage, un niveau de confiance qui indique à quel point on peut faire confiance à l'information sur l'état du système de verrouillage. Ce niveau de confiance permet de rendre compte du nombre de capteurs de verrouillage qui détectent un état pour les verrous en accord avec l'état du système de verrouillage.

Pour cela, le procédé selon l'invention comporte les étapes décrites ci-après.

Le procédé comporte une étape 101 de détection du statut de chaque capteur de verrouillage 3a, 4a, 3b, 4b, 3c, 4c, 3d, 4d, 3e, 4e grâce aux moyens de détection. Ces moyens de détection sont mis en oeuvre par le calculateur moteur qui assure qu'il n'y a pas de panne détectable des capteurs de verrouillage. L'information 5a, 7a, 5b, 7b, 5c, 7c, 7d, 7d, 5e, 7e sur le statut des capteurs de verrouillage est ensuite envoyée au logiciel applicatif du calculateur moteur 9.

Le procédé comporte également une étape 102 de détection de l'état de chaque verrou 2a, 2b, 2c, 2d, 2e au moyen de chacun des capteurs de verrouillage 3a, 4a, 3b, 4b, 3c, 4c, 3d, 4d, 3e, 4e.

Le procédé comporte ensuite une étape 103 de détermination d'un état global de chaque verrou et d'un indice de confiance associé en fonction :
- Du statut des deux capteurs qui le surveillent ;
- De l'état du verrou détecté par chacun de ces capteurs.

Plus précisément, l'état global de chaque verrou et l'indice de confiance associé sont déterminés de la manière suivante :
- lorsque les deux capteurs sont valides et qu'ils détectent que le verrou est dans un état, on attribue comme état global au verrou cet état et comme indice de confiance associé un indice de confiance maximal égal à 2 ;
- lorsque les deux capteurs sont valides, mais qu'ils ne détectent pas le même état pour le verrou, alors on considère que ce verrou est dans un état global déverrouillé et on associe à cet état global un indice de confiance égal à 0 ;
- lorsque les deux capteurs sont invalides, on attribue comme état global au verrou l'état déverrouillé et comme indice de confiance 0 ;
- lorsqu'un des capteurs est valide et l'autre invalide, on attribue comme état global au verrou l'état donné par le capteur valide et comme indice de confiance 1.

Le procédé comporte ensuite une étape 104 de détermination de l'état du système de verrouillage 1 en fonction des états globaux des verrous. Ainsi, si au moins trois verrous sont dans l'état verrouillé, l'état du système de verrouillage est verrouillé tandis que si au moins trois verrous sont dans l'état déverrouillé, l'état du système de verrouillage est déverrouillé.

Le procédé comporte également une étape 105 de détermination d'un niveau de confiance associé à cet état. Ce niveau de confiance est calculé en additionnant les indices de confiances associés aux états des verrous qui sont dans le même état que le système de verrouillage. Par exemple si le verrou 2a est dans un état verrouillé avec un indice de confiance de 2, que le verrou 2b est dans un état verrouillé avec un indice de confiance de 1, que le verrou 2c est dans un état verrouillé avec un indice de confiance de 1, et que les autres verrous sont déverrouillés, alors le système de verrouillage sera considéré comme verrouillé avec un niveau de confiance de 4.

Le procédé peut ensuite comporter une étape 106 de comparaison du niveau de confiance avec un niveau seuil. Dans ce mode de réalisation comportant cinq verrous, le niveau seuil peut être égal à 6. Si le niveau de confiance est supérieur au niveau seuil, on considère que l'information sur l'état du système de verrouillage est très fiable. Dans le cas contraire, on considère que cette information est peu fiable. Le dispositif de surveillance peut également comporter des capteurs de position aptes à détecter la position de l'inverseur de poussée. Le procédé peut alors comporter une étape de comparaison de l'état du système de verrouillage et du niveau de confiance avec les données obtenues grâce aux capteurs de position. Le procédé peut en outre comporter une étape de pondération du niveau de confiance en fonction des données issues des capteurs de position.

Le procédé permet ainsi d'obtenir des informations consolidées sur l'état d'un système de verrouillage.

Naturellement l'invention n'est pas limitée aux modes de réalisation décrits en référence aux figures et des variantes pourraient être envisagées sans sortir du cadre de l'invention telle que définie dans les revendications. Certaines étapes du procédé pourraient par exemple être inversées. En outre, l'indice de confiance pourrait ne pas être égal à 2, 1 ou 0 mais à une valeur haute, une valeur moyenne et une valeur faible.

## Revendications

1. Procédé de surveillance d'un système de verrouillage (1) d'un inverseur de poussée de turbomachine comportant un certain nombre (N) de verrous (2a, 2b, 2c, 2d, 2e), chaque verrou (2a, 2b, 2c, 2d, 2e) étant surveillé par deux capteurs de verrouillage (3a, 4a, 3b, 4b, 3c, 4c, 3d, 4d, 3e, 4e), chaque capteur de verrouillage (3a, 4a, 3b, 4b, 3c, 4c, 3d, 4d, 3e, 4e) étant apte à indiquer si le verrou (2a, 2b, 2c, 2d, 2e) qu'il surveille est dans un état verrouillé ou déverrouillé, chaque capteur de verrouillage (3a, 4a, 3b, 4b, 3c, 4c, 3d, 4d, 3e, 4e) pouvant être dans un statut valide ou invalide, le procédé comportant l'étape de:
- Détermination de l'état du système de verrouillage (1) en fonction de l'état des verrous (2a, 2b, 2c, 2d, 2e) détecté par les capteurs de verrouillage;
ledit procédé étant **caractérisé en ce qu'**il comporte l'étape de :
- (105) Détermination d'un niveau de fiabilité associé à l'état du système de verrouillage (1) en fonction du nombre de capteurs de verrouillage (3a, 4a, 3b, 4b, 3c, 4c, 3d, 4d, 3e, 4e) valides surveillant les verrous (2a, 2b, 2c, 2d, 2e) qui sont dans le même état que le système de verrouillage (1).

2. Procédé de surveillance selon la revendication précédente, dans lequel l'étape de détermination de l'état du système de verrouillage (1) comporte les étapes suivantes :
- Acquisition du statut et de l'état de chaque capteur de verrouillage par le calculateur;
- (103) Détermination de l'état global et du statut de chaque verrou en fonction du statut et de l'état des deux capteurs de verrouillage qui le surveillent ;
- (104) Détermination de l'état du système de verrouillage en fonction de l'état global de chaque verrou.

3. Procédé de surveillance selon la revendication précédente, dans lequel seuls les états de verrous détectés par des capteurs de verrouillage valides sont utilisés pour déterminer l'état global d'un verrou.

4. Procédé de surveillance selon l'une des revendications 2 ou 3, dans lequel lorsque les deux capteurs de verrouillage qui surveillent un même verrou sont invalides, on attribue à ce verrou un état global déverrouillé.

5. Procédé de surveillance selon l'une des revendications 2 à 4, dans lequel lorsque les deux capteurs de verrouillage surveillant un même verrou sont valides mais qu'ils détectent des états de ce verrou différents, on considère que ces capteurs de verrouillage sont invalides et on attribue à ce verrou un état global déverrouillé.

6. Procédé de surveillance selon l'une des revendications 2 à 5, comportant en outre une étape (103) de détermination d'un indice de confiance associé à l'état global de chaque verrou, l'indice de confiance étant égal au nombre de capteurs de verrouillage valides qui détectent un état pour le verrou conforme à l'état global du verrou.

7. Procédé de surveillance selon la revendication précédente, dans lequel le niveau de fiabilité est déterminé en additionnant les indices de confiance associés aux états globaux des verrous qui sont dans le même état que le système de surveillance.

8. Procédé de surveillance selon l'une des revendications 2 à 7, dans lequel on considère que le système de verrouillage est dans un état verrouillé lorsqu'au moins un certain nombre (P) de verrous sont dans un état global verrouillé.

9. Procédé de surveillance selon l'une des revendications 2 à 8, dans lequel on considère que le système de verrouillage est dans un état déverrouillé lorsqu'au moins un certain nombre (Q) de verrous sont dans un état global déverrouillé.

## Patentansprüche

1. Verfahren zur Überwachung eines Verriegelungssystems (1) einer Schubumkehr einer Turbomaschine, aufweisend eine bestimmte Anzahl (N) von Riegeln (2a, 2b, 2c, 2d, 2e), wobei jeder Riegel (2a, 2b, 2c, 2d, 2e) von zwei Verriegelungssensoren (3a, 4a, 3b, 4b, 3c, 4c, 3d, 4d, 3e, 4e) überwacht wird, wobei jeder Verriegelungssensor (3a, 4a, 3b, 4b, 3c, 4c, 3d, 4d, 3e, 4e) imstande ist anzuzeigen, ob der Riegel (2a, 2b, 2c, 2d, 2e), den er überwacht, in einem verriegelten oder entriegelten Zustand ist, wobei jeder Verriegelungssensor (3a, 4a, 3b, 4b, 3c, 4c, 3d, 4d, 3e, 4e) in einem gültigen oder ungültigen Status sein kann, wobei das Verfahren den folgenden Schritt umfasst:
- Bestimmen des Zustands des Verriegelungssystems (1) in Abhängigkeit vom von den Verriegelungssensoren ermittelten Zustand der Riegel (2a, 2b, 2c, 2d, 2e),
wobei das Verfahren **dadurch gekennzeichnet ist, dass** es folgenden Schritt umfasst:
- (105) Bestimmen eines dem Zustand des Verriegelungssystems (1) zugeordneten Zuverlässigkeitsniveaus in Abhängigkeit von der Anzahl gültiger Verriegelungssensoren (3a, 4a, 3b, 4b, 3c, 4c, 3d, 4d, 3e, 4e), die die Riegel (2a, 2b, 2c, 2d, 2e) überwachen, die in demselben Zustands wie das Verriegelungssystem (1) sind.

2. Überwachungsverfahren nach vorangehendem Anspruch, wobei der Schritt des Bestimmens des Zustands des Verriegelungssystems (1) die folgenden Schritte aufweist:
- Erfassen des Status und des Zustands jedes Verriegelungssensor durch den Rechner,
- (103) Bestimmen des allgemeinen Zustands und des Status jedes Riegels in Abhängigkeit vom Status und vom Zustand der zwei Verriegelungssensoren, die ihn überwachen,
- (104) Bestimmen des Zustands des Verriegelungssystems in Abhängigkeit des allgemeinen Zustands jedes Riegels.

3. Überwachungsverfahren nach vorangehendem Anspruch, wobei allein die von gültigen Verriegelungssensoren ermittelten Riegelzustände verwendet werden, um den allgemeinen Zustands eines Riegels zu bestimmen.

4. Überwachungsverfahren nach einem der Ansprüche 2 oder 3, wobei, wenn die zwei Verriegelungssensoren, die einen selben Riegel überwachen, ungültig sind, diesem Riegel ein allgemein entriegelter Zustand zugewiesen wird.

5. Überwachungsverfahren nach einem der Ansprüche 2 bis 4, wobei, wenn die zwei Verriegelungssensoren, die einen selben Riegel überwachen, gültig sind, aber unterschiedliche Zustände dieses Riegels ermitteln, davon ausgegangen wird, dass diese Verriegelungssensoren ungültig sind und diesem Riegel ein allgemein entriegelter Zustand zugewiesen wird.

6. Überwachungsverfahren nach einem der Ansprüche 2 bis 5, aufweisend ferner einen Bestimmungsschritt (103) eines dem allgemeinen Zustand jedes Riegels zugeordneten Vertrauensindexes, wobei der Vertrauensindex gleich der Anzahl der gültigen Verriegelungssensoren ist, die einen Zustand für den Riegel ermitteln, der dem allgemeinen Zustand des Riegels entspricht.

7. Überwachungsverfahren nach vorangehendem Anspruch, wobei das Zuverlässigkeitsniveau durch Addition der den allgemeinen Zuständen der Riegel, die im selben Zustand wie das Überwachungssystem sind, zugeordneten Vertrauensindizes bestimmt wird.

8. Überwachungsverfahren nach einem der Ansprüche 2 bis 7, wobei davon ausgegangen wird, dass das Verriegelungssystem in einem verriegelten Zustand ist, wenn mindestens eine bestimmte Anzahl (P) von Riegeln in einem allgemeinen verriegelten Zustand ist.

9. Überwachungsverfahren nach einem der Ansprüche 2 bis 8, wobei davon ausgegangen wird, dass das Verriegelungssystem in einem entriegelten Zustand ist, wenn mindestens eine bestimmte Anzahl (Q) von Riegeln in einem allgemeinen entriegelten Zustand ist.

## Claims

1. A method for monitoring a locking system (1) of a turbomachine thrust reverser including a number (N) of locks (2a, 2b, 2c, 2d, 2e), each lock (2a, 2b, 2c, 2d, 2e) being monitored by two locking sensors (3a, 4a, 3b, 4b, 3c, 4c, 3d, 4d, 3e, 4e), each locking sensor (3a, 4a, 3b, 4b, 3c, 4c, 3d, 4d, 3e, 4e) being able to indicate whether the lock (2a, 2b, 2c, 2d, 2e) it monitors is in a locked or unlocked state, wherein each locking sensor (3a, 4a, 3b, 4b, 3c, 4c, 3d, 4d, 3e, 4e) can be in a valid or invalid status, the method including the step of:
- determining the state of the locking system (1) as a function of the state of the locks (2a, 2b, 2c, 2d, 2e) detected by the locking sensors;
said method being **characterized in that** it includes the step of:
- (105) determining a reliability level associated with the state of the locking system (1) as a function of the number of valid locking sensors (3a, 4a, 3b, 4b, 3c, 4c, 3d, 4d, 3e, 4e) monitoring the locks (2a, 2b, 2c, 2d, 2e) which are in the same state as the locking system (1).

2. The monitoring method according to the preceding claim, wherein the step of determining the state of the locking system (1) includes the following steps of:
- acquiring the status and the state of each locking sensor by the calculator;
- (103) determining the overall state and status of each lock as a function of the status and state of two locking sensors monitoring it;
- (104) determining the state of the locking system as a function of the overall state of each lock.

3. The monitoring method according to the preceding claim, wherein only the states of the locks detected by valid locking sensors are used to determine the overall state of a lock.

4. The monitoring method according to one of claims 2 or 3, wherein when both locking sensors which monitor a same lock are invalid, an overall unlocked state is assigned to this lock.

5. The monitoring method according to one of claims 2 to 4, wherein when both locking sensors monitoring a same lock are valid but they detect different states of this lock, these locking sensors are considered as invalid and an overall unlocked state is assigned to this lock.

6. The monitoring method according to one of claims 2 to 5, further including a step (103) of determining a confidence index associated with the overall state of each lock, the confidence index being equal to the number of valid locking sensors which detect a state for the lock in accordance with the overall state of the lock.

7. The monitoring method according to the preceding claim, wherein the reliability level is determined by adding the confidence indexes associated with the overall states of the locks which are in the same state as the monitoring system.

8. The monitoring method according to one of claims 2 to 7, wherein the locking system is considered to be in a locked state when at least a number (P) of locks are in an overall locked state.

9. The monitoring method according to one of claims 2 to 8, wherein the locking system is considered to be in an unlocked state when at least one number (Q) of locks are in an overall unlocked state.
